# EUROPEAN PATENT SPECIFICATION

(11) **EP 0 927 903 B1**
(45) Date of publication and mention of the grant of the patent: **16.10.2002**
(21) Application number: 98305313.3
(22) Date of filing: 03.07.1998
(51) Int. Cl.: G02B 26/08

(54) **Deformable mirror device**
Anordnung mit verformbarem Spiegel
Dispositif à miroir déformable

(30) Priority: 31.12.1997 KR 9782105
(43) Date of publication of application: 07.07.1999
(73) Proprietor: Samsung Electronics Co., Ltd., Suwon-city, Kyungki-do (KR)
(72) Inventor: Yoon, Yong-seop, Seocho-gu, Seoul (KR)
(74) Representative: Chugg, David John

(56) References cited:
- EP-A- 0 040 302
- EP-A- 0 637 042
- EP-A- 0 754 958
- US-A- 5 629 790
- US-A- 5 629 794
- US-A- 5 696 619

## Description

The present invention relates to a deformable mirror device (DMD) for changing a proceeding path of an incident light, and more particularly, to a deformable mirror device having an improved structure so that the path of light can be easily changed with a low driving voltage.

In general, DMDs having a plurality of reflection mirrors installed to be capable of pivoting by an electrostatic force are for changing the path of light a predetermined degree. The DMD is used in image display devices of a projection TV and optical scanning devices such as a scanner, copying machines, and facsimile machines. In particular, when being adopted as an image display device, as many reflection mirrors as the number of pixels are arrayed on a two dimensional plane and each reflection mirror is pivoted according to video signals to each pixel to adjust color and brightness.

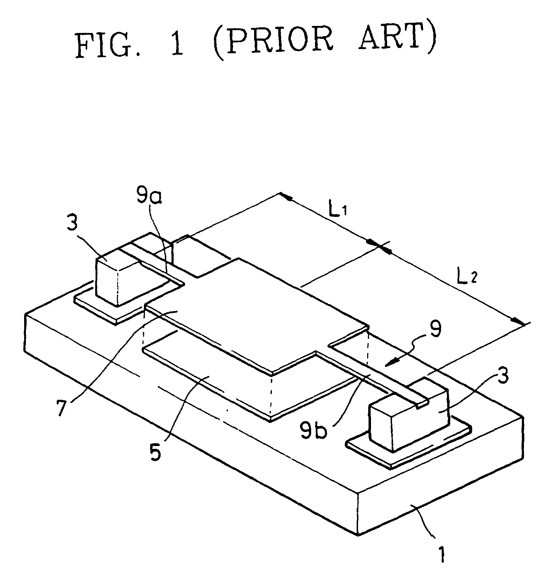

Referring to Figure 1, a conventional DMD is comprised of a substrate 1, a pair of posts 3 protruding from a surface of the substrate 1 and spaced apart a predetermined distance, an electrode 5 formed on the substrate 1, and a reflection mirror 7 supported by the posts 3 and arranged to face the electrode 5. The reflection mirror 7 has a pair of support pieces 9 extending therefrom and connected to the posts 3 for supporting the reflection mirror 7.

As shown in the drawing, the support pieces 9 are formed to be asymmetrical such that one support piece 9a is shorter than the other support piece 9b, i.e., L1≠L2 and is elastic enough to support the reflection mirror 7. Here, the support piece 9 may have a symmetrical structure.

The electrode 5 has a size corresponding to the reflection mirror 7 and is installed on the substrate 1 to face the reflection mirror 7. Thus, when an electrical potential is applied to the electrode 5, an electrostatic attraction force is generated by the electrical potential difference between the electrode 5 and the reflection mirror 7 and thus the reflection mirror 7 approaches toward the electrode 5 overcoming the rigidity of the support piece 9, thereby changing its inclination. When the electrical potential difference between the electrode 5 and the reflection mirror 7 disappears, the reflection mirror 7 returns to its original state due to the rigidity of the support piece 9 and maintains a horizontal state.

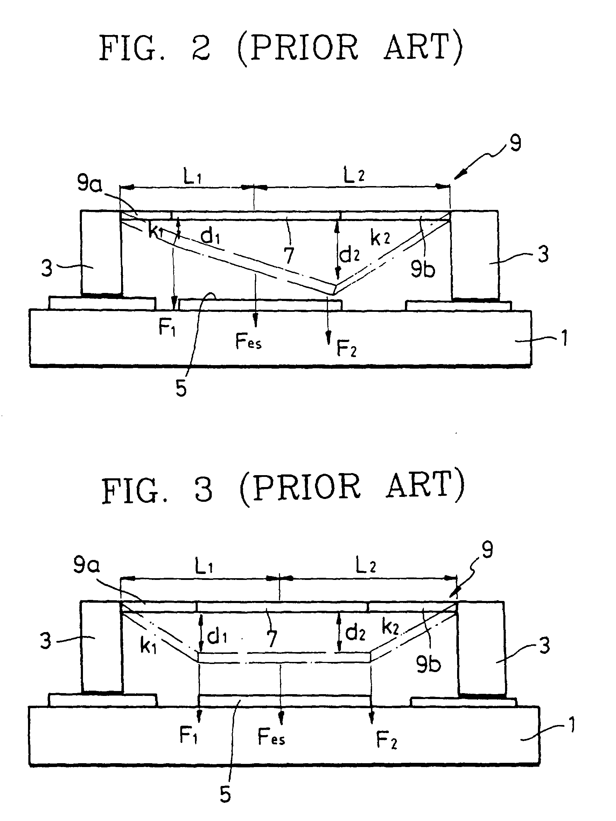

In the DMD having the above asymmetrical structure, as shown in Figure 2, when an electrical potential difference is generated between the electrode 5 and the reflection mirror 7, the boundary portions between the support pieces 9a and 9b and the reflection mirror 7 respectively receive forces F₁ and F₂ directing the electrode 5. Accordingly, the reflection mirror 7 sags downward a predetermined distance (d₁ and d₂). Here, the forces F₁ and F₂ differ from each other by the difference in the rigidities k₁ and k₂ of the two support pieces 9a and 9b, and the distances d₁ and d₂ indicating the displacement of the reflection mirror 7 downward also differ from each other, so that the inclination of the reflection mirror 7 is determined.

The forces F₁ and F₂ are inversely proportional to the distances L₁ and L₂ between the resultant force Fₑₛ of a point from which the electrostatic attraction force acts and the support point of the post 3.

In the drawing, since L₁<L₂ and k₁>k₂, and F₁>F₂, the larger force F₁ is applied to the portion with a larger rigidity k₁ and the smaller force F₂ is applied to the portion with a smaller rigidity k₂. Thus, the inclination becomes less. Meanwhile, increases of voltage applied to the electrode 5 and stress acting on the support piece 9 may cause the product to be less reliable.

Further, as shown in Figure 3, when the two support pieces 9 are arranged to be symmetric (L₁=L₂), since the forces F₁ and F₂ and the rigidity k₁ and k₂ of the support piece 9 are equal, the reflection mirror 7 sags toward the electrode 5 while maintaining a horizontal state. Thus, no change of light path occurs.

EP 0754958 (Texas Instruments) discloses a hinged micro-mechanical device, each hinge being comprised of two hinge strips spaced apart in the same plane, such that the axis of rotation of at least one of the hinge strips is different from the axis of rotation of the moveable element. As a result, the hinge strip elongates as it twists, providing a large restoring torque.

EP 040302 (IBM) discloses an optical ray deflection apparatus comprising a pair of etched plates, one being made of semi-conductor material and the other being made of an insulator such as glass. The semi-conductor plate is etched to form an elongated part having a wide central portion which forms a reflecting surface armature of suitable area suspended internally of the rectangular frame formed by the remainder of the semi-conductor plate. Planar electrodes exert an electrostatic force between one of the electrodes and an armature formed by the semi-conductor, causing angular displacement.

US 5629790 (Neukermans) discloses a micro-machined torsional scanner having a micro-machined mirror. The mirror is supported by a pair of opposed torsion bars. The mirror may be driven electrostatically, magnetically, or by both methods.

US 5629794 discloses a spatial light modulator operable in analogue mode for light beam steering or scanning applications. A deflectable mirror is supported by a torsion hinge along a torsion axis. A plurality of flexure hinges are provided to support the corners of the mirror and provide a restoring force. The combination of the torsion hinges and the flexure hinges realises a deflectable pixel that is operable in the linear range for a large range of address voltages. The pixel is electrostatically deflected by applying an address voltage to an underlying address electrode, of which a plurality are provided.

With a view to solving or reducing the above problems, it is an aim of the present invention to provide a deformable mirror device which enables a large change in the degree of light path at a relatively low electrostatic voltage by adjusting the position of an electrode with respect to a reflection mirror.

According to one aspect of the present invention, there is provided a deformable mirror device including a substrate, spaced support means comprising first and second spaced apart support posts protruding from an upper surface of said substrate, an electrode formed on the upper surface of the substrate, a mirror arranged to face said electrode by being supported on opposed sides by said support means, and first and second support pieces having predetermined rigidities for supporting said mirror, said support pieces being connected between said mirror and said first and second support posts so that inclination of said mirror can be adjusted by an electrostatic attraction between said electrode and said mirror, characterised in that said electrode is a single electrode offset from said mirror laterally toward said first or second support post such that the magnitude of the forces generated at the connection portions between the first and second support pieces and the mirror, when a voltage is applied between the electrode and the mirror, differ from each other.

Preferably, said second support piece is longer than said first support piece and said electrode is arranged to be offset toward said second support piece with respect to said reflection mirror such that the rigidity of said first support piece is greater than the rigidity of said second support piece.

Alternatively, said first and second support pieces may have the same length such that the rigidities of said first and second support pieces are equal, and said electrode is arranged to be offset toward said first or second support piece with respect to said reflection mirror.

For a better understanding of the invention, and to show how embodiments of the same may be carried into effect, reference will now be made, by way of example, to the accompanying diagrammatic drawings, in which:
Figure 1 is a perspective view illustrating a conventional DMD;
Figure 2 is a front view of the conventional DMD having an asymmetrical structure;
Figure 3 is a front view of the conventional DMD having a symmetrical structure;
Figure 4 is a perspective view illustrating a first embodiment of DMD;
Figure 5 is a front view of the first embodiment of DMD having an asymmetrical structure; and
Figure 6 is a front view of a second embodiment of DMD having a symmetrical structure.

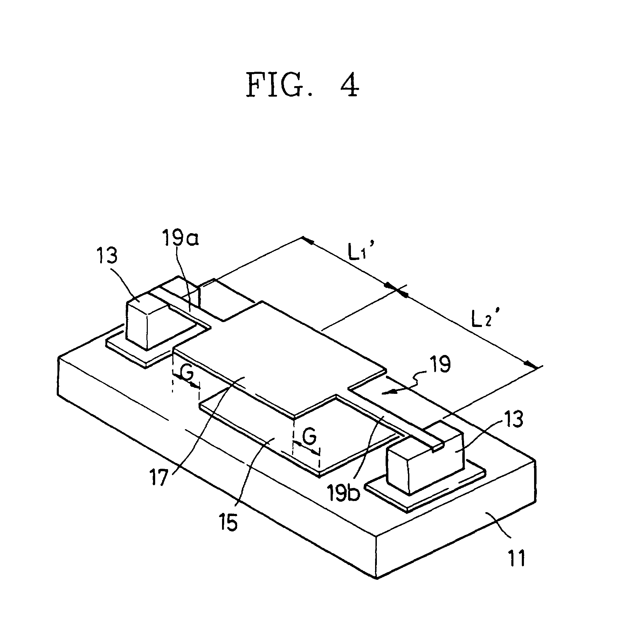

Referring to Figure 4, the deformable mirror device is comprised of a substrate 11, a pair of posts 13 protruding from the upper surface of the substrate 11 and spaced a predetermined distance from each other, an electrode 15 formed on the substrate 11, a reflection mirror 17 arranged to face the electrode 15 by being supported by the posts 13, and support pieces 19 having a predetermined rigidity for supporting the reflection mirror 17.

The support pieces 19 includes a first support piece 19a and a second support piece 19b which are respectively connected at opposing sides of the reflection mirror 17 to the posts 13 to support the reflection mirror 17.

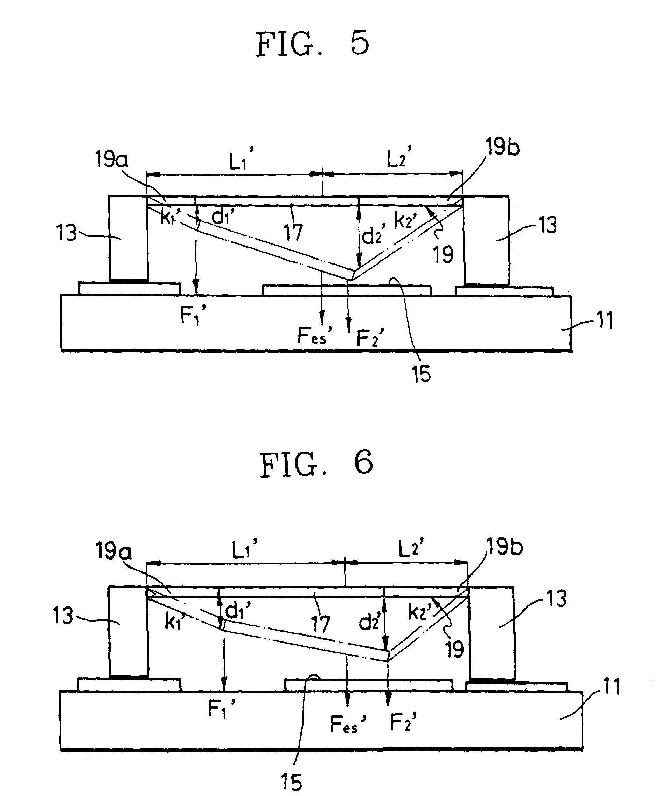

Here, as shown in Figures 4 and 5, the first and second support pieces 19a and 19b differ in their lengths (L₁'>L₂'), thus forming an asymmetrical structure, so that the rigidity k₁' of the first support piece 19a is greater than the rigidity k₂' of the second support piece 19b. Alternatively, as shown in Figure 6, the first and second support pieces 19a and 19b can be formed in a symmetrical structure such that the rigidity of the respective first and second support pieces 19a and 19b are equal.

The size of the electrode 15 corresponds to the size of the reflection mirror 17 and the electrode 15 is offset a predetermined distance G from the reflection mirror 17. Thus, the strength of a force acting on the electrode 15 differs according to the positions between the first support piece 19a and the reflection mirror 17, and the second support piece 19b and the reflection mirror 17. Here, when a potential voltage is applied to the electrode 15, electrostatic attraction is generated due to the voltage difference between the electrode 15 and the reflection mirror 17. Thus, the reflection mirror 17 deforms to approach the electrode 15 overcoming the rigidity of the support pieces 19, thereby changing its inclination. If the potential voltage difference between the electrode 15 and the reflection mirror 17 is removed, the rigidity of the support piece 9 allows the reflection mirror 17 to return to its original position to thus maintain a balanced state. The operation according to a preferred embodiment of the present invention will be described with reference to Figures 5 and 6.

As shown in Figure 5, the second support piece 19b is longer than the first support piece 19a such that the rigidity k₁'of the first support piece 19a can be greater than the rigidity k₂' of the second support piece 19b. The electrode 15 is arranged to be offset from the reflection mirror 17 toward the second support piece 19b.

When a potential voltage difference is generated between the electrode 15 and the reflection mirror 17, connecting portions between the first and second support pieces 19a and 19b and the reflection mirror 17 receive forces F₁' and F₂', respectively, toward the electrode 15. Accordingly, both sides of the reflection mirror 17 are bent downward by predetermined distances d₁' and d₂', respectively. Here, the forces F₁' and F₂' are different from each other due to the difference in the rigidities k₁' and k₂' of the two support pieces 19a and 19b. Thus, the distances d₁' and d₂' of the downward movement by the reflection mirror 17 differ so that the inclination of the reflection mirror 17 is determined. In this case, the resultant force Fₑₛ' of the electrostatic forces is moved in the offset direction of the electrode 15 so that L₁'>L₂' and F₁'<F₂'. Thus, a greater force F₂' is applied to the less rigid portion k₂', whereas the more rigid portion k₁' receives a smaller force F₁', thereby making the degree of inclination greater.

Also, unlike the conventional structure, since the smaller force F₁' is applied to the more rigid portion k₁', the degree of inclination of the reflection mirror 17, as that in the conventional structure, can be obtained with only the less rigid portion k₁' compared to the conventional rigidity k1. Therefore, the inclination of the reflection mirror 17 can be adjusted by a low electrostatic voltage.

Figure 6 shows a DMD having a symmetrical support pieces. As shown in the drawing, the electrode 15 is arranged to be offset toward the second support piece 19b, to the right of the drawing sheet, and the resultant force Fₑₛ' of the electrostatic forces is also moved so that L₁'>L₂' and F₁'<F₂'. Thus, although the rigidities applied to the first and second support pieces 19a and 19b are equal, F₁'<F₂' and d₁'<d₂' so that the reflection mirror 17 is inclined. Thus, in the symmetrical structure of the support pieces, the degree of the reflection mirror 17 can be adjusted by changing the position of the electrode 15. Also, compared to the DMD having the asymmetrical structure shown in Figure 5, since the same degree of inclination of the reflection mirror 17 can be obtained with only a less rigid portion k₂' of the second support piece 19b, driving by a lower electrostatic voltage is possible.

In Figures 4 through 6, although the electrode 15 and the reflection mirror 17 are the same size and moved a predetermined distance G to any one side, these are only for purpose of explanation. Thus, it is possible to make the shape and size of the electrode 15 different from those of the reflection mirror 17 such that the position of the resultant force Fₑₛ' are offset from the center of the reflection mirror.

In the DMD as described above, since the electrode is arranged to be offset from the reflection mirror toward one side, electrostatic voltage needed for driving the reflection mirror can be lowered, thus improving the reliability and efficiency.

Also, when the first and second support pieces for supporting the reflection mirror are of a symmetrical structure, the inclination of the reflection mirror can be adjusted.

## Claims

1. A deformable mirror device including a substrate (11), spaced support means comprising first and second spaced apart support posts (13) protruding from an upper surface of said substrate (11), an electrode (15) formed on the upper surface of the substrate (11), a mirror (17) arranged to face said electrode (15) by being supported on opposed sides by said support means (13), and first and second support pieces (19a, 19b) having predetermined rigidities for supporting said mirror (17), said first and second support pieces (19a, 19b) being connected between said mirror (17) and said first and second support posts (13) respectively, so that inclination of said mirror (17) can be adjusted by an electrostatic attraction between said electrode (15) and said mirror (17), **characterised in that** said electrode (15) is a single electrode offset from said mirror (17) laterally toward said first or second support post (13) such that the magnitude of the forces (F₁, F₂, F₁', F₂') generated at the connection portions between the first and second support pieces (19a, 19b) and the mirror (17), when a voltage is applied between the electrode (15) and the mirror (17), differ from each other.

2. A deformable mirror device as claimed claim 1, wherein said second support piece (19b) is longer than said first support piece (19a) and said electrode (15) is arranged to be offset toward said second support piece (19b) with respect to said reflection mirror (17) such that the rigidity of said first support piece (19a) is greater than the rigidity of said second support piece (19b).

3. A deformable mirror device as claimed in claim 1, wherein said first and second support pieces (19a, 19b) have the same length such that the rigidities of said first and second support pieces (19a, 19b) are equal, and said electrode (15) is arranged to be offset toward said first or second support piece (19a, 19b) with respect to said reflection mirror (17).

## Patentansprüche

1. Verformbare Spiegelvorrichtung, welche enthält: ein Substrat (11), eine beabstandete Lagerungseinrichtung, welche beabstandete erste und zweite Lagerpfosten (13) aufweist, die aus einer Oberseite des Substrates (11) hervorstehen, eine Elektrode (15), die auf der Oberseite des Substrates (11) ausgebildet ist, einen Spiegel (17), der so angeordnet ist, daß er der Elektrode (15) gegenüberliegt, indem er an gegenüberliegenden Seiten von der Lagerungseinrichtung (13) gelagert wird, und erste und zweite Lagerungsteile (19a, 19b) mit vorbestimmten Steifigkeiten zum Lagern des Spiegels (17), wobei die ersten und zweiten Lagerungsteile (19a, 19b) zwischen dem Spiegel (17) und den ersten und zweiten Lagerpfosten (13) so verbunden sind, daß die Neigung des Spiegels (17) durch eine elektrostatische Anziehung zwischen der Elektrode (15) und dem Spiegel (17) eingestellt werden kann,
**dadurch gekennzeichnet, daß**
die Elektrode (15) nur eine einzige Elektrode ist, die von dem Spiegel (17) seitlich zu dem ersten oder zweiten Lagerpfosten (13) hin so versetzt ist, daß die Größe der an den Verbindungsabschnitten zwischen den ersten und zweiten Lagerungsteilen (19a, 19b) und dem Spiegel (17) erzeugten Kräfte (F₁, F₂, F₁', F₂'), wenn eine Spannung zwischen der Elektrode (15) und dem Spiegel (17) angelegt wird, sich voneinander unterscheiden.

2. Verformbare Spiegelvorrichtung nach Anspruch 1, wobei das zweite Lagerungsteil (19b) länger als das erste Lagerungsteil (19a) ist, und die Elektrode (15) so angeordnet ist, daß sie zu dem zweiten Lagerungsteil (19b) im Bezug auf den Reflexionsspiegel (17) so versetzt ist, daß die Steifigkeit des ersten Lagerungsteils (19a) größer als die Steifigkeit des zweiten Lagerungsteils (19b) ist.

3. Verformbare Spiegelvorrichtung nach Anspruch 1, wobei die ersten und zweiten Lagerungsteile (19a, 19b) dieselbe Länge in der Weise aufweisen, daß die Steifigkeiten der ersten und zweiten Lagerungsteile (19a, 19b) gleich sind, und die Elektrode (15) so angeordnet ist, daß sie zu dem ersten oder zweiten Lagerungsteil (19a, 19b) im Bezug auf den Reflexionsspiegel (17) hin verschoben ist.

## Revendications

1. Dispositif à miroir déformable comportant un substrat (11), des moyens de support espacés comportant des premier et second montants de support espacés (13) faisant saillie à partir d'une surface supérieure dudit substrat (11), une électrode (15) formée sur la surface supérieure du substrat (11), un miroir (17) agencé pour être en vis-à-vis de ladite électrode (15) en étant supporté sur des côtés opposés par lesdits moyens de support (13), et des première et seconde pièces de support (19a, 19b) ayant des rigidités prédéterminées pour supporter ledit miroir (17), lesdites première et seconde pièces de support (19a, 19b) étant connectées entre ledit miroir (17) et lesdits premier et second montants de support (13), respectivement, de sorte que l'inclinaison dudit miroir (17) peut être ajustée par une attraction électrostatique entre ladite électrode (15) et ledit miroir (17), **caractérisé en ce que** ladite électrode (15) est une électrode unique décalée à partir dudit miroir (17) latéralement vers ledit premier ou ledit second montant de support (13), de telle sorte que les amplitudes des forces (F₁,F₂, F_{1'}, F_{2'}) générées au niveau des parties de connexion entre les première et seconde pièces de support (19a, 19b) et le miroir (17), lorsqu'une tension est appliquée entre l'électrode (15) et le miroir (17), diffèrent les unes des autres.

2. Dispositif à miroir déformable selon la revendication 1, dans lequel ladite seconde pièce de support (19b) est plus longue que ladite première pièce de support (19a), et ladite électrode (15) est agencée pour être décalée vers ladite seconde pièce de support (19b) par rapport audit miroir réflecteur (17), de telle sorte que la rigidité de ladite première pièce de support (19a) est supérieure à la rigidité de ladite seconde pièce de support (19b).

3. Dispositif à miroir déformable selon la revendication 1, dans lequel lesdites première et seconde pièces de support (19a, 19b) ont la même longueur, de telle sorte que les rigidités desdites première et seconde pièces de support (19a, 19b) sont égales, et ladite électrode (15) est agencée pour être décalée vers ladite première ou ladite seconde pièce de support (19a, 19b) par rapport audit miroir réflecteur (17).
